# EUROPEAN PATENT APPLICATION

(11) **EP 4 765 291 A1**
(43) Date of publication of application: **24.06.2026**
(21) Application number: 24907849.4
(22) Date of filing: 27.11.2024
(51) Int. Cl.: H01M 10/0567, H01M 4/58, H01M 4/36, H01M 10/052, H01M 4/38, H01M 4/48, H01M 4/583, H01M 4/587, H01M 4/525, H01M 4/505

(54) **LITHIUM SECONDARY BATTERY**

(30) Priority: 22.12.2023 KR 20230189771; 26.11.2024 KR 20240171420
(71) Applicant: LG Energy Solution, Ltd., Seoul 07335 (KR)
(72) Inventor: SUH, Soo Min, Daejeon 34122 (KR); HAN, Jun Hyeok, Daejeon 34122 (KR); KO, Yoon Seok, Daejeon 34122 (KR); LEE, Chul Haeng, Daejeon 34122 (KR); AHN, Kyoung Ho, Daejeon 34122 (KR); OH, Young Ho, Daejeon 34122 (KR); JEONG, You Kyeong, Daejeon 34122 (KR); IM, Tae Yeong, Daejeon 34122 (KR)
(74) Representative: Hoffmann Eitle
(86) International application number: PCT/KR2024/018980
(87) International publication number: WO 2025/135564

(57) **Abstract**

The present invention relates to a lithium secondary battery having improved high-temperature cycle characteristics, and particularly, to a lithium secondary battery including a positive electrode, a negative electrode, a separator, and an electrolyte, wherein the positive electrode includes lithium iron phosphate and lithium nickel cobalt manganese oxide as a positive electrode active material, a loading amount of the positive electrode is in a range of 32 mg/cm² to 60mg/cm², and the electrolyte includes a lithium salt; a first organic solvent; a second organic solvent; a first additive; and a second additive, wherein the first organic solvent is a cyclic lactone compound, the second organic solvent is a carbonate-based organic solvent, the first additive is an oligomer including a repeating unit derived from a monomer represented by Formula 1 and a repeating unit derived from a monomer represented by Formula 2, and the second additive is an imidazole-based compound.

## Description

### TECHNICAL FIELD

### Cross-reference to Related Applications

This application claims priority from Korean Patent Application Nos. 10-2023-0189771, filed on December 22, 2023, and 10-2024-0171420, filed on November 26, 2024, the disclosures of which are incorporated by reference herein.

### Technical Field

The present invention relates to a lithium secondary battery, and to a lithium secondary battery having improved high-temperature and high-voltage stability.

### BACKGROUND ART

Recently, lithium secondary batteries are being used in a variety of fields, including portable electronic devices such as mobile phones, PDAs, and laptop computers. Particularly, in line with growing concerns about environmental issues, research has been actively conducted on lithium secondary batteries with high energy density and discharge voltage as a power source for electric vehicles which may replace vehicles using fossil fuels, such as gasoline vehicle and diesel vehicle, one of major causes of air pollution, and some are in a commercialization stage.

In order to use the lithium secondary batteries as the power source for electric vehicles, the lithium secondary batteries must be able to stably maintain high output at high temperatures and high voltages. For this purpose, a carbon material, lithium metal, sulfur compound, silicon compound, or tin compound is being considered to be used as a main component of a negative electrode active material of the lithium secondary battery, and a lithium-containing cobalt oxide (LiCoO₂) or a nickel-based lithium transition metal oxide is mainly being used as a positive electrode active material.

However, with respect to the lithium-containing cobalt oxide, energy density and output characteristics are reaching practical limits, and particularly, in a case in which it is used in high-energy density applications, oxygen release in its structure and an exothermic reaction with an electrolyte in the battery in addition to structural degeneration occur in a high-temperature charged state due to its structural instability to cause explosion of the secondary battery. With respect to the nickel-based lithium transition metal oxide, since output rapidly drops in a low state of charge (SOC) range (e.g., SOC of 30% or less), there is a disadvantage in that a usable SOC range is greatly limited, and thus, there is a limitation in using the nickel-based lithium transition metal oxidein fields where output characteristics are particularly important, such as electric vehicles. Particularly, since the nickel-based lithium transition metal oxide has low structural stability, there is a problem in that battery performance are rapidly degraded due to dissolution of transition metals in the positive electrode active material or occurrence of a side reaction with the electrolyte when it is exposed to high temperatures or high voltages.

Recently, in order to solve this problem, a method of using olivine-structured lithium iron phosphate having excellent high-temperature safety, instead of the nickel-based lithium transition metal oxide, is being studied.

However, since the lithium iron phosphate has lower theoretical capacity than the conventionally used nickel-based lithium transition metal oxide, it is disadvantageous in that energy density is relatively lower than that of the nickel-based lithium transition metal oxide when designing an electrode under the same conditions.

In order to solve such a problem, a high-loading electrode, in which an amount of an electrode active material applied per area (loading amount) is increased, has recently been attempted when using the lithium iron phosphate.

However, since the high-loading electrode not only has a high degree of application of the active material, but is also designed to increase density of the electrode, a degree of electrode compression is very large, and accordingly, there is a disadvantage in that electrolyte impregnability is reduced due to an insufficient porous structure in the electrode. The reduction of the electrolyte impregnability causes a reduction in "charge transfer" which is a reaction between lithium ions and electrons, and, as a result, battery resistance may be increased.

Thus, there is a need to develop a new secondary battery which may improve the electrolyte impregnability during preparation of the secondary battery using the high-loading electrode and may simultaneously enhance charge mobility.

### DISCLOSURE OF THE INVENTION

### TECHNICAL PROBLEM

An aspect of the present invention provides a lithium secondary battery in which, when using a high-loading positive electrode, since a stable film is formed on a surface of the electrode to increase a charge transfer phenomenon by using an electrolyte, in which impregnability is improved by a specific composition, together, an increase in resistance during high-temperature storage may be suppressed and excellent cycle capacity retention may be secured.

### TECHNICAL SOLUTION

[1] The present invention provides a lithium secondary battery including a positive electrode, a negative electrode, a separator, and an electrolyte, wherein the positive electrode includes lithium iron phosphate and lithium nickel cobalt manganese oxide as a positive electrode active material, a loading amount of the positive electrode is in a range of 32 mg/cm² to 60mg/cm², and the electrolyte includes a lithium salt; a first organic solvent; a second organic solvent; a first additive; and a second additive, wherein the first organic solvent is a cyclic lactone compound, the second organic solvent is a carbonate-based organic solvent, the first additive is an oligomer including a repeating unit derived from a monomer represented by Formula 1 and a repeating unit derived from a monomer represented by Formula 2, and the second additive is an imidazole-based compound: 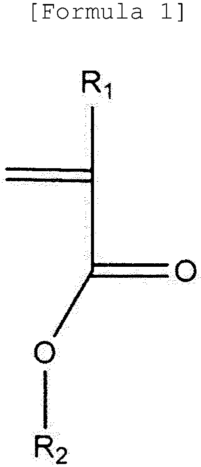 In Formula 1,
   R₁ is hydrogen or an alkyl group having 1 to 3 carbon atoms, and
   R₂ is an alkyl group having 1 to 20 carbon atoms. 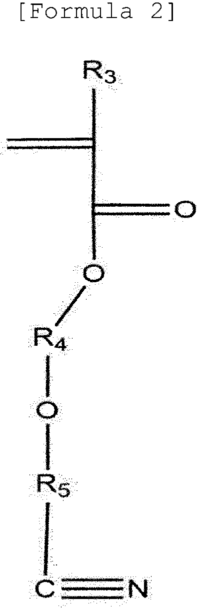 In Formula 2,
   R₃ is hydrogen or an alkyl group having 1 to 3 carbon atoms, and
   R₄ and R₅ are each independently an alkylene group having 1 to 10 carbon atoms.
[2] The present invention provides the lithium secondary battery of [1] above, wherein the lithium iron phosphate includes a compound represented by Formula 3:

   [Formula 3] Li₁₊ₐFeₓM_{y}(PO_{4-b})X'_{b}

   In Formula 3,
   M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y), X' is any one element selected from the group consisting of fluorine (F), sulfur (S), and nitrogen (N), and-0.5≤a≤0.5, 0<x≤1, 0≤y≤1, and 0≤b≤0.3.
[3] The present invention provides the lithium secondary battery of [1] or [2] above, wherein the lithium iron phosphate includes lithium iron phosphate (LiFePO₄) or lithium manganese iron phosphate (LiFeMnPO₄).
[4] The present invention provides the lithium secondary battery of at least one of [1] to [3] above, wherein the lithium nickel cobalt manganese oxide includes a compound represented by Formula 4:

   [Formula 4] Li₁₊ₐ₁Niₓ₁Co_{y1}M¹_{z}M²_{w}O₂

   In Formula 4,
   M¹ is Mn, Al, or a combination thereof, M² is at least one selected from the group consisting of Al, Zr, tungsten (W), Ti, Mg, calcium (Ca), and strontium (Sr), and 0≤a1≤0.5, 0<x1≤0.6, 0<y1≤0.4, 0<z≤0.4, and 0≤w≤0.1.
[5] The present invention provides the lithium secondary battery of at least one of [1] to [4] above, wherein the lithium nickel cobalt manganese oxide is any one selected from the group consisting of Li(Ni_{1/3}Mn_{1/3}Co_{1/3})O₂, Li(Ni_{0.3}Co_{0.2}Mn_{0.3})O₂, Li(Ni_{0.6}Co_{0.2}Mn_{0.2})O₂, Li(Ni_{0.6}Co_{0.1}Mn_{0.3})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, and Li(Ni_{0.90}Mn_{0.05}Co_{0.05})O₂.
[6] The present invention provides the lithium secondary battery of at least one of [1] to [5] above, wherein the lithium iron phosphate and the lithium nickel cobalt manganese oxide are included in a weight ratio of 50:50 to 80:20.
[7] The present invention provides the lithium secondary battery of at least one of [1] to [6] above, whereinthe lithium iron phosphate is lithium iron phosphate (LiFePO₄), and the lithium nickel cobalt manganese oxide is any one selected from the group consisting of Li(Ni_{0.6}Mn_{0.2}Co_{0.2})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, and Li(Ni_{0.90}Mn_{0.05}Co_{0.05})O₂.
[8] The present invention provides the lithium secondary battery of at least one of [1] to [9] above, whereinthe lithium iron phosphate is lithium manganese iron phosphate (LiFeMnPO₄), and the lithium nickel cobalt manganese oxide is any one selected from the group consisting of Li(Ni_{1/3}Mn_{1/3}Co_{1/3})O₂, Li(Ni_{0.5}Co_{0.2}Mn_{0.3})O₂, Li(Ni_{0.6}Co_{0.2}Mn_{0.2})O₂, and Li(Ni_{0.6}Co_{0.1}Mn_{0.3})O₂.
[9] The present invention provides the lithium secondary battery of at least one of [1] to [8] above, wherein the cyclic lactone compound includes gamma-butyrolactone.
[10] The present invention provides the lithium secondary battery of at least one of [1] to [9] above, wherein the second organic solvent is a cyclic carbonate-based organic solvent.
[11] The present invention provides the lithium secondary battery of at least one of [1] to [10] above, wherein the first organic solvent and the second organic solvent are included in a volume ratio of 50:50 to 99:1.
[12] The present invention provides the lithium secondary battery of at least one of [1] to [11] above, wherein, in Formula 1, R₁ is hydrogen, or an alkyl group having 1 or 2 carbon atoms.
[13] The present invention provides the lithium secondary battery of at least one of [1] to [12] above, wherein, in Formula 1, R₂ is an alkyl group having 1 to 10 carbon atoms.
[14] The present invention provides the lithium secondary battery of at least one of [1] to [13] above, wherein, in Formula 2, R₃ is hydrogen, or an alkyl group having 1 or 2 carbon atoms.
[15] The present invention provides the lithium secondary battery of at least one of [1] to [14] above, wherein, in Formula 2, R₄ and R₅ are each independently an alkylene group having 1 to 8 carbon atoms.
[16] The present invention provides the lithium secondary battery of at least one of [1] to [15] above, wherein the oligomer is an oligomer represented by Formula 5: 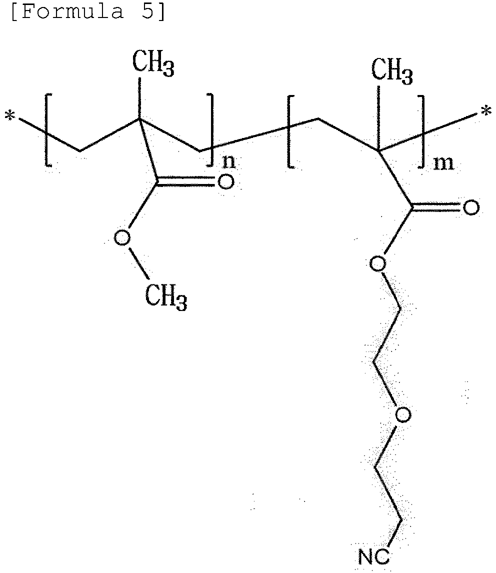 In Formula 5,
   n is an integer of 1 to 500, and m is an integer of 1 to 300.
[17] The present invention provides the lithium secondary battery of at least one of [1] to [16] above, wherein the first additive is included in an amount of 0.01 wt% to 10 wt% based on a total weight of the electrolyte.
[18] The present invention provides the lithium secondary battery of at least one of [1] to [17] above, wherein the imidazole-based compound is a compound represented by Formula 6:

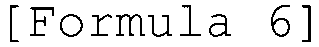

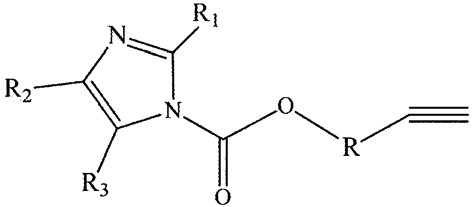

   In Formula 6,
   R is an unsubstituted or substituted alkylene group having 1 to 5 carbon atoms, and R₆ to R₈ are each independently hydrogen, an alkyl group having 1 to 3 carbon atoms, or -CN.
[19] The present invention provides the lithium secondary battery of at least one of [1] to [18] above, wherein the imidazole-based compound is a compound represented by Formula 6A: 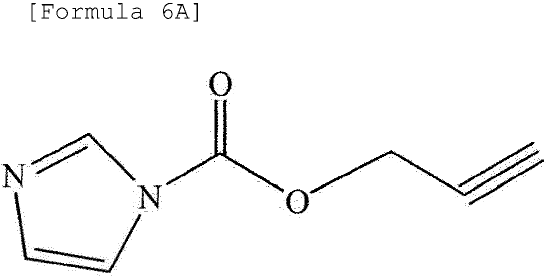
[20] The present invention provides the lithium secondary battery of at least one of [1] to [19] above, wherein the second additive is included in an amount of 0.01 wt% to 10 wt% based on a total weight of the electrolyte.
[21] The present invention provides the lithium secondary battery of at least one of [1] to [20] above, wherein the negative electrode includes a carbon-based active material, a silicon-based active material, or a mixture of the carbon-based active material and the silicon-based active material.

### ADVANTAGEOUS EFFECTS

A lithium secondary battery according to the present invention may achieve excellent high-temperature and high-voltage safety by using a high-loading positive electrode including lithium iron phosphate and lithium nickel cobalt manganese oxide in a specific composition ratio. Also, since the lithium secondary battery according to the present invention uses an electrolyte having a specific composition together when using the high-loading positive electrode, a film having low resistance and capable of improving charge mobility may be formed on a surface of the high-loading positive electrode to prevent degradation of the electrode, and, as a result, the lithium secondary battery, in which excellent cycle capacity retention may be secured by improving high-temperature and high-voltage stability, may be achieved.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

For example, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylenegroup including 1 to 5 carbon atoms, that is, -CH₂-, -CH₂CH₂-, - CH₂CH₂CH₂-, -CH₂(CH₂)CH-, -CH₂CH₂CH₂CH₂CH₂-, and -CH(CH₂)CH₂CH₂-.

Furthermore, in this specification, the expression "alkylene group" denotes a branched or unbranched aliphatic hydrocarbon group or a functional group in which one hydrogen atom is removed from carbon atoms located at both ends of the aliphatic hydrocarbon group. In an embodiment, the alkylene group may be substituted or unsubstituted. The alkylene group may include a methylene group, an ethylene group, a propylene group, an isopropylene group, a butylene group, an isobutylene group, a tert-butylene group, a pentylene group, and 3-pentylene group, but is not limited thereto, and each of them may be optionally substituted in another embodiment.

Also, unless otherwise defined in this specification, the expression "substitution" denotes that at least one hydrogen bonded to carbon is substituted with another element such as fluorine.

Furthermore, unless otherwise defined in this specification, the expression "*" denotes a portion connected between ends of a formula.

Also, a "loading amount" in this specification means an amount of an active material per unit area of a positive electrode active material layer including olivine-structured lithium iron phosphate which is formed on a current collector, wherein it is expressed as "mg/cm²". In this case, the "loading amount" in this specification means a total sum of loading amounts of both surfaces of a positive electrode.

Hereinafter, the present invention will be described in detail.

A lithium secondary battery according to the present invention includes at least one of configurations disclosed below, and may include any combination between technically possible configurations among the configurations below.

### Lithium Secondary Battery

The present invention relates to a lithium secondary battery.

Specifically, the present invention provides a lithium secondary battery including a positive electrode, a negative electrode, a separator, and an electrolyte.

The positive electrode may include lithium iron phosphate and lithium nickel cobalt manganese oxide as a positive electrode active material.

A loading amount of the positive electrode may be in a range of 32 mg/cm² to 60mg/cm².

The electrolyte may include a lithium salt; a first organic solvent; a second organic solvent; a first additive; and a second additive.

The first organic solvent may include a cyclic lactone compound.

The second organic solvent may include a carbonate-based organic solvent.

The first additive may include an oligomer including a repeating unit derived from a monomer represented by Formula 1 below and a repeating unit derived from a monomer represented by Formula 2 below.

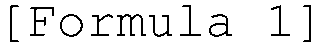

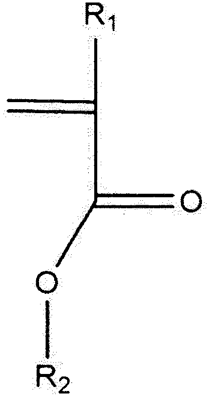

In Formula 1,
R₁ is hydrogen or an alkyl group having 1 to 3 carbon atoms, and
R₂ is an alkyl group having 1 to 20 carbon atoms.

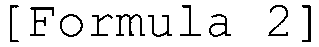

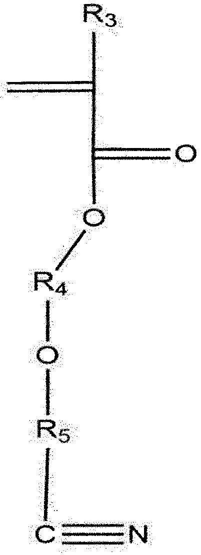

In Formula 2,
R₃ is hydrogen or an alkyl group having 1 to 3 carbon atoms, and
R₄ and R₅ are each independently an alkylene group having 1 to 10 carbon atoms.

The second additive may include an imidazole-based compound.

### (1) Positive Electrode

The positive electrode of the present invention may include lithium iron phosphate as a positive electrode active material. Specifically, the lithium iron phosphate may include a compound represented by Formula 3 below.

[Formula 3] Li₁₊ₐFeₓM_{y}(PO_{4-b})X'_{b}

In Formula 3,
M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y),
X' is at least one element selected from the group consisting of fluorine (F), sulfur (S), and nitrogen (N), and
-0.5≤a≤0.5, 0<x≤1, 0≤y≤1, and 0≤b≤0.3.

As a representative example, the lithium iron phosphate represented by Formula 3 may include lithium iron phosphate (LiFePO₄) or lithium manganese iron phosphate (LiFeMnPO₄).

As the lithium iron phosphate represented by Formula 3, primary particles with a nanometer size may be used for high input/output of lithium ions, and a secondary particle, as an aggregate of the primary particles, may be prepared by assembling these primary particles and may also be used. For example, in a case in which the primary particles are used as the lithium iron phosphate, a particle size may be in a range of 50 nm to 2,000 nm, more specifically, 200 nm to 1,100 nm. Also, in a case in which the secondary particle, as the aggregate of the primary particles, is prepared by assembling these primary particles and is used, an average particle diameter (D50) of the secondary particle may be in a range of 0.5 µm to 30 µm.

The lithium iron phosphate represented by Formula 3 may have an amorphous layer of carbon or metal oxide which is coated on its surface. In this case, since the amorphous layer of carbon or metal oxide, which is coated on the surface, is not crystalline, lithium ions are intercalated/deintercalated into/from the lithium iron phosphate of a core portion through the amorphous layer of a shell. Since the amorphous layer of carbon or metal oxide, which is coated on the surface, has excellent electronic conductivity while allowing the lithium ions to pass therethrough, it may also act as a current path to the lithium iron phosphate core that is an active material, and thus, high-rate charge and discharge may be possible. Furthermore, safety may be further increased because an unnecessary reaction between the core material and an electrolyte solution may be controlled when the surface of the lithium iron phosphate is coated with the amorphous layer of carbon or metal oxide.

Since phosphorus and oxygen form strong covalent bonds in a tetrahedral structure of PO₄, the lithium iron phosphate represented by Formula 3 is structurally stable against volume changes due to charge and discharge and has high thermal stability, but has relatively low electrical conductivity because movement of lithium ions and flow of electrons are not smooth in comparison to a lithium transition metal oxide due to a strong oxygen bond. Thus, in order to increase electrical conductivity of the positive electrode in the present invention, the electrical conductivity of the positive electrode may be further improved by using a lithium nickel cobalt manganese oxide in combination with the lithium iron phosphate.

The lithium nickel cobalt manganese oxide may include a compound represented by Formula 4 below.

[Formula 4] Li₁₊ₐ₁Niₓ₁Co_{y1}M¹_{z}M²_{w}O₂

In Formula 4,
M¹ is Mn, Al,or a combination thereof,
M² is any one selected from the group consisting of Al, Zr, tungsten (W), Ti, Mg, calcium (Ca), and strontium (Sr), and 0≤a1≤0.5,0<x1<1.0,0<y1≤0.4, 0<z≤0.4,and 0≤w≤0.1.

In Formula 4, 1+a1 represents a molar ratio of lithium in the lithium nickel cobalt manganese oxide, wherein a1 may satisfy 0≤a1≤0.5, or may satisfy 0≤a1≤0.2, and may preferably satisfy 0≤a1≤0.1. When the molar ratio of the lithium satisfies the above range, a layered crystal structure of the lithium nickel cobalt manganese oxide may be stably formed. In a case in which a1 is greater than 0.5, there is a concern that initial discharge capacity of the battery decreases or that gas generation is intensified during high-temperature operation due to an excessive increase in lithium (Li) byproduct on a surface of the positive electrode active material.

x1 represents a molar ratio of nickel among total metals excluding lithium in the lithium nickel cobalt manganese oxide, wherein x1 may satisfy 0<x1<1.0, or may satisfy 0.55<x1<1.0. When x1 satisfies the above range, excellent capacity characteristics may be achieved.

y1 represents a molar ratio of cobalt among the total metals excluding lithium in the lithium nickel cobalt manganese oxide, wherein y1 may satisfy 0<y1≤0.4, particularly 0<y1≤0.3, and more particularly 0.05≤y1≤0.3.

z represents a molar ratio of element M¹ among the total metals excluding lithium in the lithium transition metal oxide, wherein z may satisfy 0<z≤0.4, preferably 0<z≤0.3, and more preferably 0.01≤z≤0.3.

w represents a molar ratio of element M² among the total metals excluding lithium in the lithium transition metal oxide, wherein w may satisfy 0<w≤0.1, preferably 0<w≤0.05, and more preferably 0.01≤w≤0.02.

Specifically, the lithium nickel cobalt manganese oxide may be any one selected from the group consisting of Li(Ni_{1/3}Mn_{1/3}Co_{1/3})O₂, Li(Ni_{0.5}Co_{0.2}Mn_{0.3})O₂, Li(Ni_{0.6}Co_{0.2}Mn_{0.2})O₂, Li(Ni_{0.6}Co_{0.1}Mn_{0.3})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, and Li(Ni_{0.90}Mn_{0.05}Co_{0.05})O₂.

In the positive electrode active material of the present invention, the lithium iron phosphate and the lithium nickel cobalt manganese oxide may be included in a weight ratio of 50:50 to 80:20, and may specifically be included in a weight ratio of 50:50 to 70:30.

In a case in which the mixing ratio of the lithium iron phosphate to the lithium nickel cobalt manganese oxide satisfies the above range, high-temperature and high-voltage safety of the battery may be secured and electrical conductivity may be improved at the same time.

Specifically, in a case in which an amount ratio of the lithium iron phosphate to the lithium nickel cobalt manganese oxide is less than a weight ratio of 80, excellent capacity characteristics and electrical conductivity may be secured, and, in a case in which the amount ratio of the lithium iron phosphate to the lithium nickel cobalt manganese oxide is greater than or equal to a weight ratio of 50, high-temperature and high-voltage stability may be secured.

Particularly, in the positive electrode active material of the present invention, in a case in which the lithium iron phosphate is lithium iron phosphate (LiFePO₄), it is preferable to use the lithium iron phosphate in combination with any one lithium nickel cobalt manganese oxide selected from the group consisting of Li(Ni_{0.6}Mn_{0.2}Co_{0.2})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, and Li(Ni_{0.90}Mn_{0.05}Co_{0.05})O₂, in order to achieve a high voltage of 4.4 V or more and high energy density.

Also, in the positive electrode active material of the present invention, in a case in which the lithium iron phosphate is lithium manganese iron phosphate (LiFeMnPO₄), it is preferable to use the lithium iron phosphate in combination with any one lithium nickel cobalt manganese oxide selected from the group consisting of Li(Ni_{1/3}Mn_{1/3}Co_{1/3})O₂, Li(Ni_{0.5}Co_{0.2}Mn_{0.3})O₂, Li(Ni_{0.6}Co_{0.2}Mn_{0.2})O₂, and Li(Ni_{0.6}Co_{0.1}Mn_{0.3})O₂, in order to achieve high-temperature stability and high energy density.

Also, in order to design a high-capacity electrode in the present invention, a loading amount of the positive electrode including the lithium iron phosphate and the lithium nickel cobalt manganese oxide may be 32 mg/cm² or more (loading amount based on single surface: 16 mg/cm² or more), may specifically be in a range of 32 mg/cm² to 60mg/cm², and may more preferably be in a range of 40 mg/cm² to 60 mg/cm². In a case in which the loading amount of the positive electrode satisfies the above range, design of a high energy density battery may be possible.

The positive electrode may include a positive electrode collector; and a positive electrode material mixture layer disposed on at least one surface of the positive electrode collector. In this case, the positive electrode material mixture layer may include a mixture of the above-described lithium iron phosphate and lithium nickel cobalt manganese oxide as the positive electrode active material.

The positive electrode collector may typically have a thickness of 3 µm to 500 µm.

Microscopic irregularities may be formed on the surface of the positive electrode collector to improve adhesion of the positive electrode active material. For example, the positive electrode collector may be used in various shapes such as that of a film, a sheet, a foil, a net, a porous body, a foam body, a non-woven fabric body, and the like.

The positive electrode material mixture layer is disposed on at least one surface of the positive electrode collector. Specifically, the positive electrode material mixture layer may be disposed on one surface or both surfaces of the positive electrode collector.

Also, the lithium iron phosphate represented by Formula 3 may be included in an amount of 80 wt% to 99 wt% in the positive electrode material mixture layer in consideration of exhibiting sufficient capacity.

The positive electrode material mixture layer may further include a binder and/or a conductive agent together with the above-described positive electrode active material.

The binder improves adhesion between positive electrode active material particles and adhesion between the positive electrode active material and the currentcollector. As an example of the binder, any one of a fluorine resin-based binder such as polyvinylidene fluoride (PVDF); a rubber-based binder including a styrene butadiene rubber (SBR), an acrylonitrile-butadiene rubber,or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder, or a mixture of two or more thereof may be used.

The binder may be included in an amount of0.1 wt% to 15 wt%, preferably, 0.1 wt% to 10 wt% in the positive electrode material mixture layer.

Next, the conductive agent is used to provide conductivity to the electrode, wherein any conductive agent may be used without particular limitation as long as it has electron conductivity without causing chemical changes in the battery. As a specific example of the conductive agent, carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The conductive agent may be added in an amount of 1 wt% to 30 wt% in the positive electrode material mixture layer.

The positive electrode may be prepared by coating the positive electrode collector with a positive electrode slurry including the positive electrode active material as well as optionally the binder, the conductive agent, and a solvent for forming a positive electrode slurry and then drying and rolling the coated positive electrode collector. Also, the positive electrode may be prepared by mixing the positive electrode active material with optionally the binder and the conductive agent to prepare a film and then laminating the film on the positive electrode collector.

The solvent for forming a positive electrode slurry, for example, may include at least one selected from the group consisting of distilled water, N-methyl pyrrolidone, ethanol, methanol, and isopropyl alcohol, and may preferably include N-methyl pyrrolidone, in terms of facilitating dispersion of the positive electrode active material, the binder, and/or the conductive agent.

### (2) Negative Electrode

Next, the negative electrode will be described.

The negative electrode may include a negative electrode active material.

A carbon-based active material, a silicon-based active material, or a mixture of the carbon-based active material and the silicon-based active material may be used as the negative electrode active material.

As the carbon-based active material, various carbon-based active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based active material is not particularly limited, and materials of various shapes, such as an irregular shape, planar shape, flaky shape, spherical shape, or fibrous shape, may be used.

Specifically, any one of natural graphite or artificial graphite may be used as the carbon-based active material, and natural graphite and artificial graphite may be used together to suppress exfoliation of the active material by increasing adhesion to a current collector.

Also, the silicon-based active material, for example, may include at least one selected from the group consisting of metal silicon (Si), silicon oxide (SiOₓ, where 0<x<2), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, barium (Ba), radium (Ra), scandium (Sc), Y, Ti, Zr, hafnium (Hf), rutherfordium (Rf), V, Nb, tantalum (Ta), dubnium (Db), chromium (Cr), molybdenum (Mo), W, seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), Cu, silver (Ag), gold (Au), Zn, cadmium (Cd), boron (B), Al, Ga, tin (Sn), In, Ti, germanium (Ge), phosphorus (P), arsenic (As), antimony (Sb), bismuth (Bi), S, selenium (Se), tellurium (Te), polonium (Po), and a combination thereof.

An average particle diameter (D₅₀) of the silicon-based active material may be in a range of 1 µm to 30 µm, preferably, 2 µm to 15 µm in terms of ensuring the structural stability during charge and discharge and reducing a side reaction with the electrolyte solution.

Also, the negative electrode of the present invention may include at least one selected from the carbon-based active material and the silicon-based active material.

Specifically, the negative electrode of the present invention may include the carbon-based active material and the silicon-based active material.

In this case, a weight ratio of the silicon-based active material to the carbon-based active material may be in a range of 1:99 to 30:70, specifically, 3:97 to 15:85. In a case in which the mixing ratio of the silicon-based active material to the carbon-based active material satisfies the above range, since volume expansion of the silicon-based active material is suppressed while capacity characteristics are improved, excellent cycle performance may be ensured.

The negative electrode may include a negative electrode collector; and a negative electrode material mixture layer disposed on at least one surface of the negative electrode collector. In this case, the negative electrode active material may be included in the negative electrode material mixture layer.

The negative electrode collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector.

The negative electrode collector may typically have a thickness of 3 µm to 500 µm.

Microscopic irregularities may be formed on the surface of the negative electrode collector to improve adhesion of the negative electrode active material. For example, the negative electrode collector may be used in various shapes such as that of a film, a sheet, a foil, a net, a porous body, a foam body, a non-woven fabric body, and the like.

The negative electrode material mixture layer is disposed on at least one surface of the negative electrode collector. Specifically, the negative electrode material mixture layer may be disposed on one surface or both surfaces of the negative electrode collector.

The negative electrode active material may be included in an amount of 60 wt% to 99 wt% in the negative electrode material mixture layer in terms of sufficiently exhibiting the capacity in the secondary battery while minimizing an effect of volume expansion/contraction on the battery.

The negative electrode material mixture layer may further include a conductive agent and/or a binder together with the negative electrode active material.

The conductive agent is a component for further improving conductivity of the negative electrode active material, wherein it is not particularly limited as long as it has conductivity without causing chemical changes in the battery, and, for example, a conductive material, such as: carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be added in an amount of 10 wt% or less, preferably, 5 wt% or less in the negative electrode material mixture layer.

The binder is a component that assists in binding between the conductive agent, the active material, and the current collector, wherein the binder may typically include a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder.

The binder may be included in an amount of 0.1 wt% to 15 wt%, preferably, 0.1 wt% to 10 wt% in the negative electrode material mixture layer.

The negative electrode may be prepared by coating the negative electrode collector with a negative electrode slurry including the negative electrode active material as well as optionally the binder, the conductive agent, and a solvent for forming anegative electrode slurry and then drying and rolling the coated negative electrode collector. Also, the negative electrode may be prepared by mixing the negative electrode active material with optionally the binder and the conductive agent to prepare a film and then laminating the film on the negative electrode collector.

The solvent for forming a negative electrode slurry, for example, may include at least one selected from the group consisting of distilled water, N-methyl pyrrolidone, ethanol, methanol, and isopropyl alcohol, and may preferably include distilled water, in terms of facilitating dispersion of the negative electrode active material, the binder, and/or the conductive agent.

### (3) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte as well as low resistance to the transfer of non-aqueous electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### (4)Electrolyte

Next, the electrolyte of the present invention may include a lithium salt; a first organic solvent; a second organic solvent; a first additive; and a second additive, and specific examples of each component are as described below.

### (4-1) Lithium Salt

First, lithium salts commonly used in an electrolyte solution for a lithium secondary battery may be used as the lithium salt without limitation, and, for example, the lithium salt may include Li⁺ as a cation, and may include any one selected from thegroup consisting of F⁻, Cl⁻, Br⁻, I⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF6⁻, SbF6⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (Lithium bis (fluorosulfonyl) imide, LiFSI), LiN(SO₂CF₂CF₃)₂ (lithium bis(pentafluoroethanesulfonyl)imide, LiBETI), and LiN(SO₂CF₃)₂ (lithium bis(trifluoromethane sulfonyl)imide, LiTFSI), or a mixture of two or more thereof, and may specifically include any one selected from the group consisting of LiBF₄, LiPF₆, LiN(SO₂F)₂ (Lithium bis(fluorosulfonyl)imide, LiFSI), LiN(SO₂CF₂CF₃)₂ (lithium bis(pentafluoroethanesulfonyl)imide, LiBETI), and LiN(SO₂CF₃)₂ (lithium bis(trifluoromethane sulfonyl)imide, LiTFSI). In addition to these materials, a lithium salt typically used in an electrolyte solution of a lithium secondary battery may be used without limitation.

The lithium salt may be appropriately changed in a normally usable range, but may be included in a concentration of 0.8 M to 3.0 M, specifically 1.0M to 2.0M, and preferably 1.0M to 1.8M in the electrolyte solution to obtain an optimum effect of forming a film for preventing corrosion of a surface of the electrode.

In a case in which the concentration of the lithium salt is within the above range, viscosity of the electrolyte may be controlled to achieve optimal impregnability, and an effect of improving capacity characteristics and cycle characteristics of the lithium secondary battery may be obtained by improving mobility of lithium ions.

### (4-2) First Organic Solvent

Next, the first organic solvent will be described.

The first organic solvent may include a cyclic lactone compound.

The cyclic lactone compound is a compound having high permittivity and ionic conductivity, wherein it may improve a charge transfer degradation phenomenon occurring when operating a high-loading electrode.

The cyclic lactone compound may include gamma-butyrolactone.

The first organic solvent may be included in an amount of 39 wt% to 80 wt% based on a total weight of the electrolyte, may specifically be included in an amount of 48 wt% to 80 wt%, and may more preferably be included in an amount of 52 wt% to 70 wt%.

In a case in which the amount of the first organic solvent satisfies the above range, an effect of reducing battery resistance may be achieved by improving lithium ion transfer characteristics.

### (4-3) Second Organic Solvent

Next, the second organic solvent will be described.

The second organic solvent may include a carbonate-based organic solvent such that decomposition due to an oxidation reaction during charge and discharge of the secondary battery may be minimized and desired properties may be exhibited together with an additive.

Specifically, the carbonate-based organic solvent preferably includes any one selected from the group consisting of a cyclic carbonate-based organic solvent having high ionic conductivity and high permittivity and a linear carbonate-based organic solvent having low viscosity and low permittivity, and may specifically include a cyclic carbonate-based organic solvent.

The cyclic carbonate-based organic solvent may specifically include any one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or two or more thereof, and among them, the cyclic carbonate-based organic solvent may include ethylene carbonate which may maintain stable passivation ability of a solid electrolyte interface (SEI) layer.

Also, the linear carbonate-based organic solvent may include any one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, or two or more thereof, and among them, the linear carbonate-based organic solvent may include ethyl methyl carbonate (EMC) or dimethyl carbonate (DMC) with low viscosity characteristics as well as a small molecular size among the linear carbonate-based organic solvents.

In a case in which the cyclic carbonate and the linear carbonate are mixed and used as the second organic solvent, the cyclic carbonate-based organic solvent and the linear carbonate-based organic solvent may be mixed in a volume ratio of about 1:99 to 50:50 and used, or may be mixed in a volume ratio of 20:80 to 40:60 and used in order to secure low viscosity characteristics.

In the present invention, the first organic solvent and the second organic solvent may be included in a volume ratio of 50:50 to 99:1, and may specifically be included in a volume ratio of 80:20 to 99:1.

In a case in which the mixing ratio of the first organic solvent to the second organic solvent satisfies the above range, a high effect of ion transfer characteristics may be achieved and battery performance with low resistance characteristics may be secured. That is, in a case in which the volume ratio of the first organic solvent is 50 or more, the effect of ion transfer characteristics may be secured, and, in a case in which the volume ratio is 99 or less, a stable film may be formed to improve battery life characteristics.

### (4-4) First Additive

Next, the first additive will be described.

The first additive may include an oligomer including a repeating unit derived from a monomer represented by Formula 1 below and a repeating unit derived from a monomer represented by Formula 2 below:

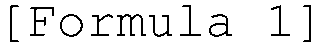

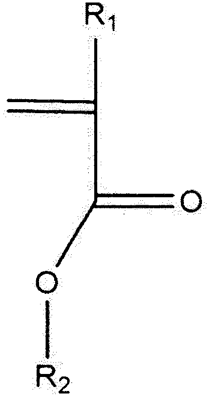

In Formula 1,
R₁ is hydrogen or an alkyl group having 1 to 3 carbon atoms, and
R₂ is an alkyl group having 1 to 20 carbon atoms.

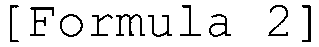

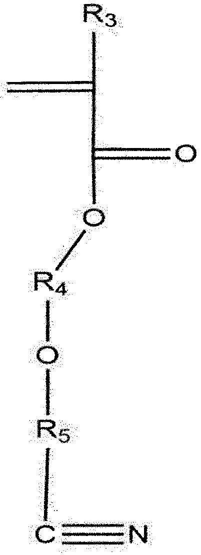

In Formula 2,
R₃ is hydrogen or an alkyl group having 1 to 3 carbon atoms, and
R₄ and R₅ are each independently an alkylene group having 1 to 10 carbon atoms.

Since the present invention includes the oligomer including the repeating unit derived from a monomer based on an acrylate structure containing an ether group and a terminal nitrile group as the first additive, an effect of forming a low-resistance CEI (cathode electrolyte interphase) film may be improved by adsorbing the ether group, the nitrile group, and an ester functional group on a surface of the positive electrode, and, as a result, interfacial resistance may be reduced. Also, since the oligomer may form a highly ion-conductive film through the ether group, the nitrile group, and the ester functional group in its structure, it may prevent degradation of the electrode by improving electrolyte impregnability and ion transfer capability. In this case, the nitrile group or ester functional group may effectively suppress dissolution of metal ions from the positive electrode by chelating the metal ions such as iron (Fe) or Mn. Thus, high-temperature life characteristics and high-temperature durability of the lithium secondary battery may be further improved.

In Formula 1, R₁ may be hydrogen, or an alkyl group having 1 or 2 carbon atoms, and may specifically be an alkyl group having 1 or 2 carbon atoms.

Also, in Formula 1, R₂ may be an alkyl group having 1 to 10 carbon atoms, or may be an alkyl group having 1 to 5 carbon atoms, and may specifically be an alkyl group having 1 to 5 carbon atoms.

Furthermore, in Formula 2, R₃ may be hydrogen, or an alkyl group having 1 or 2 carbon atoms, and R₁ may specifically be an alkyl group having 1 or 2 carbon atoms.

Also, in Formula 2, R₄ may be an alkylene group having 1 to 8 carbon atoms, or may be an alkylene group having 1 to 5 carbon atoms, and may specifically be an alkylene group having 2 to 5 carbon atoms.

Furthermore, in Formula 2, R₅ may be an alkylene group having 1 to 8 carbon atoms, or may be an alkylene group having 1 to 5 carbon atoms, and may specifically be an alkylene group having 2 to 5 carbon atoms.

More specifically, the oligomer of the present invention may be an oligomer represented by Formula 5 below.

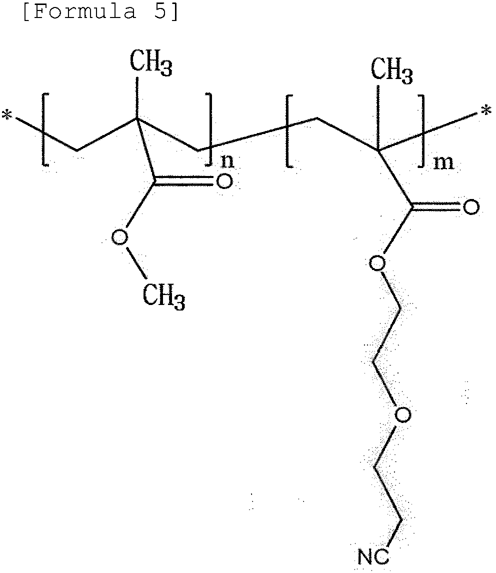

In Formula 5,
n is an integer of 1 to 500, and m is an integer of 1 to 300.

In Formula 5, n may be an integer of 1 to 300, or may be an integer of 1 to 200, and may specifically be an integer of 1 to 100.

Also, in Formula 5, m may be an integer of 1 to 300, or may be an integer of 1 to 200, and may specifically be an integer of 1 to 100.

A weight-average molecular weight (Mw) of the oligomer of the present invention may be controlled by the number of repeating units, and may be in a range of about 3,000 g/mol to about 300,000 g/mol, specifically, 5,000 g/mol to 50,000 g/mol. In a case in which the weight-average molecular weight of the oligomer is within the above range, since physical properties of the oligomer itself are prevented from being rigid, affinity for a non-aqueous electrolyte solution solvent is increased to allow the oligomer to be easily dissolved, and thus, formation of a uniform and excellent electrolyte may be expected.

The weight-average molecular weight may be measured using a gel permeation chromatography (GPC) apparatus, and, unless otherwise specified, a molecular weight may mean the weight-average molecular weight. For example, as GPC conditions in the present invention, measurement is made using 1200 series by Agilent Technologies, a PL mixed B column by Agilent Technologies may be used as a column used in this case, and THF or DMF may be used as a solvent.

The first additive may be included in an amount of 0.01 wt% to 10 wt% based on the total weight of the electrolyte.

In a case in which the amount of the first additive satisfies the above range, an effect of forming a stable film on the surfaces of the positive electrode and the negative electrode may be achieved, and anion stabilization of the lithium salt and dissolution of transition metal (Fe) may be suppressed. In a case in which the amount of the first additive is 0.01 wt% or more, the anion stabilization may be more stably maintained due to the formation of a complex with anions of the lithium salt during battery operation, and the metal ion dissolution may be suppressed by complex formation with metal ions and film formation due to positive electrode surface adsorption. Furthermore, in a case in which the amount of the first additive is 10 wt% or less, degradation of capacity and cycle characteristics may be prevented because an increase in viscosity of the electrolyte solution due to the surplus compound may be prevented and mobility of ions in the battery may be improved at the same time, a cell swelling inhibition effect may be significantly improved, and an increase in battery resistance may be effectively prevented by suppressing excessive film formation.

Specifically, the first additive may be included in an amount of 0.01 wt% to 7.0 wt% based on a total weight of a non-aqueous electrolyte solution for a lithium secondary battery, may preferably be included in an amount of 0.1 wt% to 7.0 wt%, and may more preferably be included in an amount of 0.5 wt% to 7.0 wt%.

### (4-5) Second Additive

Also, the additive of the present invention may include an imidazole-based compound as a second additive.

The imidazole-based compound may be a compound represented by Formula 6 below.

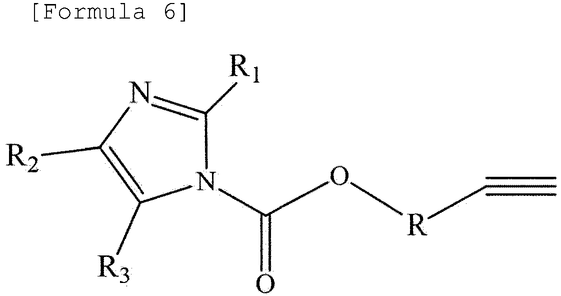

In Formula 6,
R is an unsubstituted or substituted alkylene group having 1 to 5 carbon atoms, and
R₆ to R₈ are each independently hydrogen, an alkyl group having 1 to 3 carbon atoms, or -CN.

The compound represented by Formula 6, as the second additive, may scavenge a Lewis acid, such as HF and PF₅, decomposition products of the lithium salt, by action of an unshared electron pair of a nitrogen element included in its structure as a Lewis base, and may simultaneously suppress generation of the Lewis acid by stabilizing the anions of the lithium salt. As a result, the compound represented by Formula 6 may suppress degradation behavior of the film on the surface of the positive electrode or negative electrode, which iscaused by the Lewis acid, and may prevent the resulting additional decomposition of the electrolyte solution. As a result, it may improve high-temperature storage characteristics by mitigating self-discharge of the secondary battery.

Also, since the compound represented by Formula 6 includes a propargyl functional group that is easily reduced on the surface of the negative electrode in its structure, it may form an SEI layer with high passivation ability on the surface of the negative electrode to prevent an additional reduction decomposition reaction of the electrolyte solution which is caused by instability of the SEI layer and may improve high-temperature durability of the negative electrode itself, and thus, it may suppress a self-discharge reaction of the negative electrode. Particularly, since the propargyl group included in the compound represented by Formula 1 may be adsorbed on surfaces of metallic impurities included in the positive electrode to suppress dissolution of the impurities, it may prevent an internal short circuit by suppressing electrodeposition of the metal ions on the surface of the negative electrode.

In Formula 6, R may be an unsubstituted or substituted alkylene group having 1 to 3 carbon atoms, and may specifically be an unsubstituted alkylene group having 1 or 2 carbon atoms.

Also, in Formula 6, R₆ may be hydrogen, an alkyl group having 1 carbon atom, or -CN, or may be hydrogen, an alkyl group having 1 carbon atom, or -CN, and may specifically be hydrogen or -CN.

Furthermore, in Formula 6, R₇ may be hydrogen, an alkyl group having 1 carbon atom, or -CN, or may be hydrogen, an alkyl group having 1 carbon atom, or -CN, and may specifically be hydrogen or -CN.

Also, in Formula 6, R₈ may be hydrogen, an alkyl group having 1 carbon atom, or -CN, or may be hydrogen, an alkyl group having 1 carbon atom, or -CN, and may specifically be hydrogen or -CN.

Preferably, the compound represented by Formula 6 may be a compound represented by Formula 6A below.

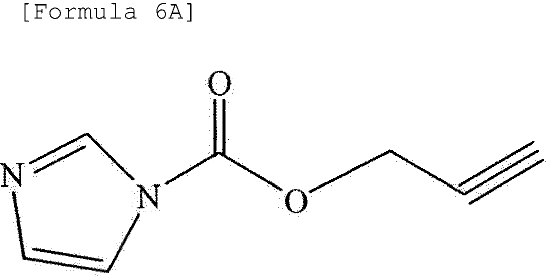

The second additive may be included in an amount of 0.01 wt% to 10 wt% based on the total weight of the electrolyte. If the second additive is included in the above amount range, an effect of improving the anion stabilization and the effect of forming a stable film may be achieved.

In a case in which the amount of the second additive is 0.01 wt% or more, the anion stabilization may be more stably maintained due to the formation of the complex with the anions of the lithium salt during battery operation, and the metal ion dissolution may be suppressed by complex formation with the metal ions and the film formation due to positive electrode surface adsorption. Furthermore, in a case in which the amount of the second additive is 10 wt% or less, the degradation of the capacity and cycle characteristics may be prevented because the increase in the viscosity of the electrolyte solution due to the surplus compound may be prevented and the mobility of the ions in the battery may be improved at the same time, the cell swelling inhibition effect may be significantly improved, and the increase in the battery resistance may be effectively prevented by suppressing the excessive film formation.

Specifically, the second additive may be included in an amount of 0.01 wt% to 7.0 wt% based on the total weight of the non-aqueous electrolyte solution for a lithium secondary battery, may preferably be included in an amount of 0.1 wt% to 7.0 wt%, and may more preferably be included in an amount of 0.5 wt% to 7.0 wt%.

### (4-6) Other Additives

The lithium secondary battery of the present invention may further include other additives in the electrolyte, if necessary, in order to prevent the occurrence of collapse of the negative electrode due to decomposition of the electrolyte in a high output environment or to further improve low-temperature high rate discharge characteristics, high-temperature stability, overcharge prevention, and an effect of suppressing battery swelling at high temperature. In a case in which these other additives are included, the other additives may be named as a third additive.

Typical examples of the other additives may include any one additive selected from the group consisting of a cyclic carbonate-based compound, a sulfate-based compound, a sultone-based compound, a phosphate-based compound, a borate-based compound, a nitrile-based compound, a benzene-based compound, an amine-based compound, a silane-based compound, and a lithium salt-based compound, and may preferably include any one of a cyclic carbonate-based compound, a sulfate-based compound, and a sultone-based compound.

The cyclic carbonate-based compound may include vinylene carbonate (VC).

The sulfate-based compound, for example, may be ethylene sulfate (Esa), trimethylene sulfate (TMS), or methyl trimethylene sulfate (MTMS).

The sultone-based compound may include any one compound selected from the group consisting of 1,3-propane sultone (PS), 1,4-butane sultone, ethane sultone, 1,3-propene sultone (PRS), 1,4-butene sultone, and 1-methyl-1,3-propenesultone.

The phosphate-based compound may include at least one compound selected from the group consisting of lithium difluoro(bisoxalato)phosphate, lithium difluorophosphate, tris(trimethyl silyl)phosphate, tris(2,2,2-trifluoroethyl)phosphate, and tris(trifluoroethyl)phosphate.

The borate-based compoundmay include tetraphenylborate and lithium oxalyldifluoroborate.

The nitrile-based compoundmay include any one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the electrolyte, wherein the lithium salt-based compound may include at least one compound selected from the group consisting of LiPO₂F₂, LiODFB, LiBOB (lithium bisoxalate borate (LiB(C₂O₄)₂), LiBF₄, and LiDFOP.

Two or more other additives may be mixed and used, and the other additives may be included in an amount of less than 10 wt%, particularly 0.01 wt% to less than 8.0 wt%, and preferably 0.05 wt% to 5.0 wt% based on the total weight of the electrolyte. If the amount of the other additives satisfies the above range, a side reaction caused by unreacted additives may be suppressed, and effects of improving low-temperature output of the battery and improving high-temperature storage characteristics and high-temperature life characteristics may be further improved.

The lithium secondary battery according to the present invention as described above may be suitably used in portable devices, such as mobile phones, notebook computers, and digital cameras, and electric cars such as hybrid electric vehicles (HEVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### [Examples]

### Example 1.

### (Electrolyte Preparation)

LiPF₆ was dissolved in an organic solvent, in which gamma-butyrolactone and ethylene carbonate were mixed in a volume ratio of 80:20, such that a concentration of the LiPF₆ was 1.0 M, and 0.01 wt% of the oligomer of Formula 5 (n is 30, m is 70, weight-average molecular weight: 12,000 g/mol), as a first additive, and 0.01 wt% of the compound represented by Formula 6A, as a second additive, were then added to prepare an electrolyte for a lithium secondary battery of the present invention.

### (Positive Electrode Preparation)

A positive electrode active material (LiFeMnPO₄ and Li(Ni_{0.6}Co_{0.1}Mn_{0.3})O₂ = 70:30 weight ratio), a conductive agent (carbon black), and a binder (polyvinylidene fluoride,PVDF) were added in a weight ratio of 90:5:5 to N-methyl-2-pyrrolidone (NMP), as a solvent, to prepare a positive electrode active material slurry (solid content 48 wt%). A 15um thick positive electrode collector (Al thin film) was coated with the positive electrode active material slurry, dried, and roll-pressed to prepare a positive electrode (both surfaces loading amount: 48 mg/cm², loading amount based on single surface: 24 mg/cm²).

### (Negative Electrode Preparation)

A negative electrode active material (artificial graphite), CMC-SBR as a binder, and carbon black, as a conductive agent, were added to distilled water, as a solvent, in a weight ratio of 95:2:3 to prepare a negative electrode active material slurry (solid content 70 wt%). An 8µm thick negative electrode collector (Cu thin film) was coated with the negative electrode active material slurry, dried, and roll-pressed to prepare a negative electrode.

### (Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and the above-prepared electrolyte for a lithium secondary battery was injected to prepare a lithium secondary battery.

### Example 2.

### (Electrolyte Preparation)

LiPF₆ was dissolved in an organic solvent, in which gamma-butyrolactone and ethylene carbonate were mixed in a volume ratio of 80:20, such that a concentration of the LiPF₆ was 1.0 M, and 0.1 wt% of the oligomer of Formula 5 (n is 30, m is 70, weight-average molecular weight: 12,000 g/mol), as a first additive, and 0.1 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Example 3.

### (Electrolyte Preparation)

LiPF₆ was dissolved in an organic solvent, in which gamma-butyrolactone and ethylene carbonate were mixed in a volume ratio of 80:20, such that a concentration of the LiPF₆ was 1.0 M, and 1.0 wt% of the oligomer of Formula 5 (n is 30, m is 70, weight-average molecular weight: 12,000 g/mol), as a first additive, and 1.0 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Example 4.

### (Electrolyte Preparation)

LiPF₆ was dissolved in an organic solvent, in which gamma-butyrolactone and ethylene carbonate were mixed in a volume ratio of 80:20, such that a concentration of the LiPF₆ was 1.0 M, and 5.0 wt% of the oligomer of Formula 5 (n is 30, m is 70, weight-average molecular weight: 12,000 g/mol), as a first additive, and 5.0 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Example 5.

### (Electrolyte Preparation)

LiPF₆ was dissolved in an organic solvent, in which gamma-butyrolactone and ethylene carbonate were mixed in a volume ratio of 50:50, such that a concentration of the LiPF₆ was 1.0 M, and 1.0 wt% of the oligomer of Formula 5 (n is 30, m is 70, weight-average molecular weight: 12,000 g/mol), as a first additive, and 1.0 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Example 6.

### (Electrolyte Preparation)

LiPF₆ was dissolved in an organic solvent, in which gamma-butyrolactone and ethylene carbonate were mixed in a volume ratio of 40:60, such that a concentration of the LiPF₆ was 1.0 M, and 1.0 wt% of the oligomer of Formula 5 (n is 30, m is 70, weight-average molecular weight: 12,000 g/mol), as a first additive, and 1.0 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Example 7.

### (Positive Electrode Preparation)

A positive electrode active material (LiFeMnPO₄ and Li(Ni_{0.6}Co_{0.1}Mn_{0.3})O₂ = 70:30 weight ratio), a conductive agent (carbon black), and a binder (polyvinylidene fluoride,PVDF) were added in a weight ratio of 90:5:5 to N-methyl-2-pyrrolidone (NMP), as a solvent, to prepare a positive electrode active material slurry (solid content 48 wt%). A 100um thick positive electrode collector (Al thin film) was coated with the positive electrode active material slurry, dried, and roll-pressed to prepare a positive electrode (both surfaces loading amount: 32 mg/cm², loading amount based on single surface: 16 mg/cm²).

### (Secondary Battery Preparation)

A lithium secondary battery was prepared in the same manner as in Example 1 except that the above-prepared positive electrode was used.

### Example 8.

### (Positive Electrode Preparation)

A positive electrode active material (LiFeMnPO₄ and Li(Ni_{0.6}Co_{0.1}Mn_{0.3})O₂ = 70:30 weight ratio), a conductive agent (carbon black), and a binder (polyvinylidene fluoride,PVDF) were added in a weight ratio of 90:5:5 to N-methyl-2-pyrrolidone (NMP), as a solvent, to prepare a positive electrode active material slurry (solid content 48 wt%). A 100um thick positive electrode collector (Al thin film) was coated with the positive electrode active material slurry, dried, and roll-pressed to prepare a positive electrode (both surfaces loading amount: 60 mg/cm², loading amount based on single surface: 30 mg/cm²).

### (Secondary Battery Preparation)

A lithium secondary battery was prepared in the same manner as in Example 1 except that the above-prepared positive electrode was used.

### Comparative Example 1.

### (Electrolyte Preparation)

An electrolyte for a lithium secondary battery was prepared in the same manner as in Example 1 except that LiPF₆ was dissolved in an organic solvent, in which gamma-butyrolactone and ethylene carbonate were mixed in a volume ratio of 80:20, such that a concentration of the LiPF₆ was 1.0 M, and 1.0 wt% of the oligomer of Formula 5 (n is 30, m is 70, weight-average molecular weight: 12,000 g/mol) was includedas a first additive, and a second additive was not included.

### (Secondary Battery Preparation)

A lithium secondary battery was prepared in the same manner as in Example 1 except that the above-prepared electrolyte was injected.

### Comparative Example 2.

### (Electrolyte Preparation)

An electrolyte for a lithium secondary battery was prepared in the same manner as in Example 1 except that LiPF₆ was dissolved in an organic solvent, in which gamma-butyrolactone and ethylene carbonate were mixed in a volume ratio of 80:20, such that a concentration of the LiPF₆ was 1.0 M, and a first additive was not included and 1.0 wt% of the compound represented by Formula 6A was included as a second additive.

### (Secondary Battery Preparation)

A lithium secondary battery was prepared in the same manner as in Example 1 except that the above-prepared electrolyte was injected.

### Comparative Example 3.

### (Electrolyte Preparation)

LiPF₆ was dissolved in an organic solvent, in which ethyl methyl carbonate and ethylene carbonate were mixed in a volume ratio of 80:20, such that a concentration of the LiPF₆ was 1.0 M, and 1.0 wt% of the oligomer of Formula 5 (n is 30, m is 70, weight-average molecular weight: 12,000 g/mol), as a first additive, and 1.0 wt% of the compound represented by Formula 6A, as a second additive, were then added to prepare an electrolyte for a lithium secondary battery of the present invention.

### (Secondary Battery Preparation)

A lithium secondary battery was prepared in the same manner as in Example 1 except that the above-prepared electrolyte was injected.

### Comparative Example 4.

### (Positive Electrode Preparation)

A positive electrode active material (LiFeMnPO₄ and Li(Ni_{0.6}Co_{0.1}Mn_{0.3})O₂ = 70:30 weight ratio), a conductive agent (carbon black), and a binder (polyvinylidene fluoride,PVDF) were added in a weight ratio of 90:5:5 to N-methyl-2-pyrrolidone (NMP), as a solvent, to prepare a positive electrodeactive material slurry (solid content 48 wt%). A 100um thick positive electrode collector (Al thin film) was coated with the positive electrode active material slurry, dried, and roll-pressed to prepare a positive electrode (both surfaces loading amount: 64 mg/cm², loading amount based on single surface: 32 mg/cm²).

### (Secondary Battery Preparation)

A lithium secondary battery was prepared in the same manner as in Example 1 except that the above-prepared positive electrode was used.

### [Experimental Examples]

### Experimental Example 1.Evaluation of High-temperature

### (45°C) Cycle Characteristics

After each of the lithium secondary batteries prepared in the examples and the lithium secondary batteries prepared in the comparative examples was charged at 0.33 C rate to 4.2 V under constant current/constant voltage conditions at room temperature (25°C) and discharged at 0.33 C rate for 10 seconds, initial capacity was measured and initial internal resistance of the battery was measured by a 10s-DCIR (direct current internal resistance) method at room temperature using PNE-0506 charge/discharge equipment (manufacturer: PNE solution).

Then, after charging of each lithium secondary batteryat 0.33 C rate to 4.2 V under constant current/constant voltage conditions at a high temperature (45°C) and discharging of each lithium secondary battery at 0.33 C rate to 2.5 V under constant current conditions were set as 1 cycle and 100 cycles were performed, discharge capacity was measured. Also, internal resistance of the battery after high-temperature cycles was measured by the 10s-DCIR method.

After a capacity retention (%) was calculated using the initial capacity obtained at room temperature (25°C) and the discharge capacity obtained after the high-temperature cycles, and the results thereof are presented in Table 1.

Furthermore, a resistance increase rate (%) was calculated using the initial internal resistance of the battery obtained at room temperature and the internal resistance of the battery obtained after the high-temperature cycles, and the results thereof are presented in Table 1 below.

**[Table 1]**

| | Capacity retention (%) | Resistance increase rate (%) |
|---|---|---|
| Example 1 | 94.5 | 54.3 |
| Example 2 | 94.1 | 54.6 |
| Example 3 | 93.8 | 55.4 |
| Example 4 | 93.6 | 54.3 |
| Example 5 | 91.0 | 57.8 |
| Example 6 | 91.4 | 57.6 |
| Example 7 | 90.9 | 57.4 |
| Example 8 | 90.8 | 57.7 |
| Comparative Example 1 | 81.1 | 63.2 |
| Comparative Example 2 | 80.9 | 64.2 |
| Comparative Example 3 | 79.7 | 65.2 |
| Comparative Example 4 | 79.8 | 66.1 |

Referring to Table 1, with respect to the lithium secondary batteries prepared in Examples 1 to 8 of the present invention, it may be confirmed that capacity retentions (%) after the high-voltage, high-temperature cycles were improved in comparison to those of the lithium secondary batteries of Comparative Examples 1 to 4. Particularly, with respect to the lithium secondary battery of Comparative Example 4, capacity and resistance characteristics after the high-temperature cycles appeared to be inferior to those of the examples as an increase in resistance was caused, and electrolyte solution impregnability was reduced due to an increase in loading amount.

### Experimental Example 2. Evaluation of High-temperature (45°C) Storage Characteristics

After each of the lithium secondary batteries prepared in the examples and the lithium secondary batteries prepared in the comparative examples was fully charged at a constant current-constant voltage of 0.33 C/4.15 V at room temperature and discharged for 10 seconds, initial capacity was measured and initial internal resistance of the battery was measured by a 10s-DCIR (direct current internal resistance) method at room temperature using PNE-0506 charge/discharge equipment (manufacturer: PNE solution).

Then, each lithium secondary battery was stored at 60° C for 10 weeks (SOC (state of charge) 100%), then charged at 0.33 C rate to 4.2 V under constant current/constant voltage conditions, and discharged at 0.33 C rate to 2.5 V under constant current conditions to measure discharge capacity. Also, internal resistance of the battery after high-temperature cycles was measured by the 10s-DCIR method.

After a capacity retention (%) was calculated using the initial capacity obtained before high-temperature storage and the discharge capacity obtained after the high-temperature storage, and the results thereof are presented in Table 2.

Furthermore, a resistance increase rate (%) was calculated using the initial internal resistance of the battery obtained at room temperature and the internal resistance of the battery obtained after the high-temperature storage, and the results thereof are presented in Table 2below.

**[Table 2]**

| | Capacity retention (%) | Resistance increase rate (%) |
|---|---|---|
| Example 1 | 93.5 | 55.3 |
| Example 2 | 93.1 | 55.6 |
| Example 3 | 92.8 | 56.4 |
| Example 4 | 92.6 | 57.3 |
| Example 5 | 90.0 | 58.8 |
| Example 6 | 90.4 | 58.6 |
| Example 7 | 89.9 | 58.4 |
| Example 8 | 89.8 | 58.7 |
| Comparative Example 1 | 80.1 | 64.2 |
| Comparative Example 2 | 79.9 | 65.2 |
| Comparative Example 3 | 78.7 | 66.2 |
| Comparative Example 4 | 78.8 | 67.1 |

Referring to Table 2, with respect to the lithium secondary batteries prepared in Examples 1 to 8 of the present invention, it may be confirmed that capacity retentions (%) and resistance increase rates after the high-temperature storage were improved in comparison to those of the lithium secondary batteries of Comparative Examples 1 to 4. Particularly, with respect to the lithium secondary battery of Comparative Example 4, the capacity retention and resistance increase rate after the high-temperature storage appeared to be inferior to those of the examples as the increase in resistance was caused, and the electrolyte solution impregnability was reduced due to the increase in loading amount.

Although the present invention has been described above with reference to preferred embodiments thereof, it will be understood by those skilled in the art or those of ordinary skill in the art that various modifications and changes may be made therein without departing from the spirit and technical scope of the present invention described in the accompanying claims. Accordingly, the technical scope of the present invention should not be limited to the contents described in the detailed description of the specification, but should be determined by the claims.

## Claims

1. A lithium secondary battery comprising a positive electrode, a negative electrode, a separator, and an electrolyte,
wherein the positive electrode comprises lithium iron phosphate and lithium nickel cobalt manganese oxide as a positive electrode active material,
a loading amount of the positive electrode is in a range of 32 mg/cm² to 60 mg/cm², and
the electrolyte comprises a lithium salt; a first organic solvent; a second organic solvent; a first additive; and a second additive,
wherein the first organic solvent is a cyclic lactone compound,
the second organic solvent is a carbonate-based organic solvent,
the first additive is an oligomer including a repeating unit derived from a monomer represented by Formula 1 and a repeating unit derived from a monomer represented by Formula 2, and
the second additive is an imidazole-based compound: 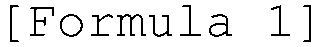 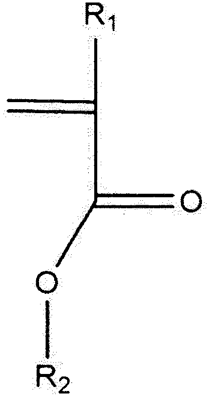
wherein, in Formula 1,
R₁ is hydrogen or an alkyl group having 1 to 3 carbon atoms, and
R₂ is an alkyl group having 1 to 20 carbon atoms. 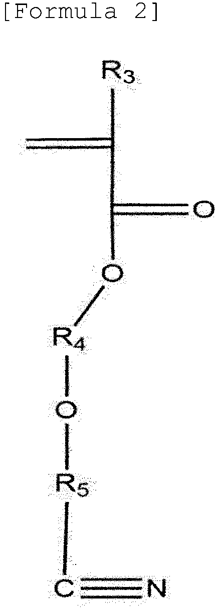
wherein, in Formula 2,
R₃ is hydrogen or an alkyl group having 1 to 3 carbon atoms, and
R₄ and R₅ are each independently an alkylene group having 1 to 10 carbon atoms.

2. The lithium secondary battery of claim 1, wherein the lithium iron phosphate comprises a compound represented by Formula 3:
[Formula 3] Li₁₊ₐFeₓM_{y}(PO_{4-b})X'_{b}
wherein, in Formula 3,
M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y),
X' is at least one element selected from the group consisting of fluorine (F), sulfur (S), and nitrogen (N), and
-0.5≤a≤0.5, 0<x≤1, 0≤y≤1, and 0≤b≤0.3.

3. The lithium secondary battery of claim 2, wherein the lithium iron phosphate is lithium iron phosphate (LiFePO₄) or lithium manganese iron phosphate (LiFeMnPO₄).

4. The lithium secondary battery of claim 1, wherein the lithium nickel cobalt manganese oxide comprises a compound represented by Formula 4:
[Formula 4] Li₁₊ₐ₁Niₓ₁Co_{y1}M¹_{z}M²_{w}O₂
wherein, in Formula 4,
M¹ is Mn, Al,or a combination thereof,
M² is any one selected from the group consisting of Al, Zr, tungsten (W), Ti, Mg, calcium (Ca), and strontium (Sr), and
0≤a1≤0.5,0<x1<1.0,0<y1≤0.4, 0<z≤0.4,and 0≤w≤0.1.

5. The lithium secondary battery of claim 4, wherein the lithium nickel cobalt manganese oxide is any one selected from the group consisting of Li (Ni_{1/3}Mn_{1/3}Co_{1/3})O₂, Li(Ni_{0.3}Co_{0.2}Mn_{0.3})O₂, Li (Ni_{0.6}Co_{0.2}Mn_{0.2})O₂, Li (Ni_{0.6}Co_{0.1}Mn_{0.3})O₂, Li(Ni_{0.7}Mn_{0.2}Co_{0.1})O₂, Li (Ni_{0.8}Mn_{0.1}Co_{0.1})O₂, Li (Ni_{0.8}Co_{0.15}Al_{0.05})O₂, Li (Ni_{0.86}Mn_{0.07}Co_{0.05}Al_{0.02})O₂, and Li (Ni_{0.90}Mn_{0.03}Co_{0.05})O₂.

6. The lithium secondary battery of claim 1, wherein the lithium iron phosphate and the lithium nickel cobalt manganese oxide are included in a weight ratio of 50:50 to 80:20.

7. The lithium secondary battery of claim 1, wherein the lithium iron phosphate is lithium iron phosphate (LiFePO₄), and
the lithium nickel cobalt manganese oxide is any one selected from the group consisting of Li(Ni_{0.6}Mn_{0.2}Co_{0.2})O₂, Li (Ni_{0.7}Mn_{0.2}Co_{0.1})O₂, Li (Ni_{0.8}Mn_{0.1}Co_{0.1})O₂, Li (Ni_{0.8}Co_{0.15}Al_{0.05})O₂, Li (Ni_{0.86}Mn_{0.07}Co_{0.05}Al_{0.02})O₂, and Li (Ni_{0.90}Mn_{0.03}Co_{0.05})O₂.

8. The lithium secondary battery of claim 1, wherein the lithium iron phosphate is lithium manganese iron phosphate (LiFeMnPO₄), and
the lithium nickel cobalt manganese oxide is any one selected from the group consisting of Li(Ni_{1/3}Mn_{1/3}Co_{1/3})O₂, Li (Ni_{0.3}Co_{0.2}Mn_{0.3})O₂, Li (Ni_{0.6}Co_{0.2}Mn_{0.2})O₂, and Li (Ni_{0.6}Co_{0.1}Mn_{0.3})O₂.

9. The lithium secondary battery of claim 1, wherein the cyclic lactone compound comprises gamma-butyrolactone.

10. The lithium secondary battery of claim 1, wherein the carbonate-based organic solvent is a cyclic carbonate-based organic solvent.

11. The lithium secondary battery of claim 1, wherein the first organic solvent and the second organic solvent are included in a volume ratio of 50:50 to 99:1.

12. The lithium secondary battery of claim 1, wherein, in Formula 1, R₁ is hydrogen, or an alkyl group having 1 or 2 carbon atoms, and R₂ is an alkyl group having 1 to 10 carbon atoms.

13. The lithium secondary battery of claim 1, wherein, in Formula 2, R₃ is hydrogen, or an alkyl group having 1 or 2 carbon atoms, and R₄ and R₅ are each independently an alkylene group having 1 to 8 carbon atoms.

14. The lithium secondary battery of claim 1, wherein the oligomer is an oligomer represented by Formula 5: 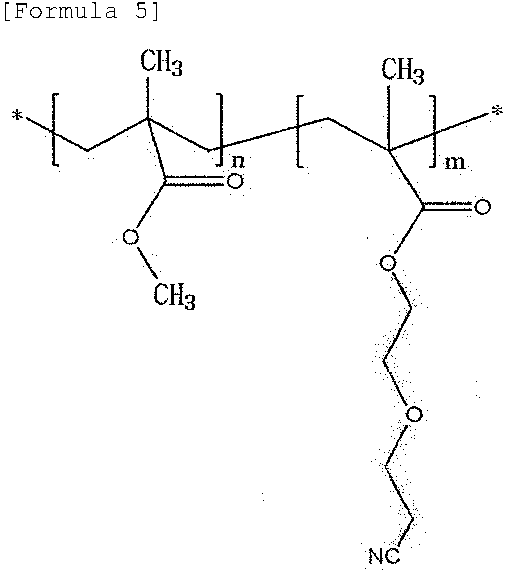 wherein, in Formula 5,
n is an integer of 1 to 500, and m is an integer of 1 to 300.

15. The lithium secondary battery of claim 1, wherein the first additive is included in an amount of 0.01 wt% to 10 wt% based on a total weight of the electrolyte.

16. The lithium secondary battery of claim 1, wherein the imidazole-based compound is a compound represented by Formula 6: 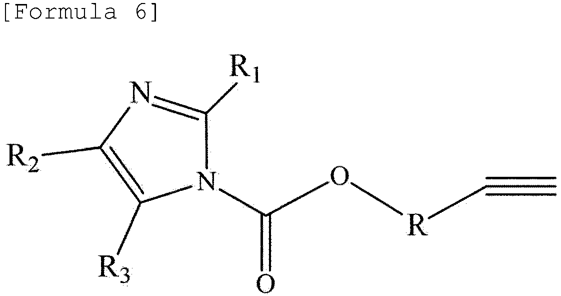 wherein, in Formula 6,
R is an unsubstituted or substituted alkylene group having 1 to 5 carbon atoms, and
R₆ to R₈ are each independently hydrogen, an alkyl group having 1 to 3 carbon atoms, or -CN.

17. The lithium secondary battery of claim 16, wherein the imidazole-based compound is a compound represented by Formula 6A:

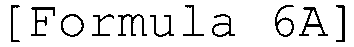

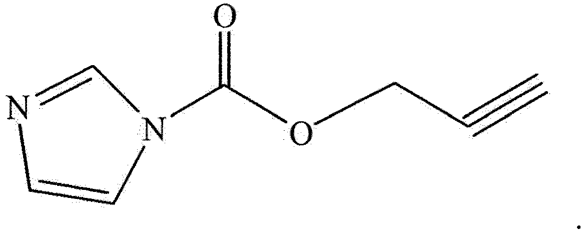

18. The lithium secondary battery of claim 1, wherein the second additive is included in an amount of 0.01 wt% to 10 wt% based on a total weight of the electrolyte.

19. The lithium secondary battery of claim 1, wherein the negative electrode comprises a carbon-based active material, a silicon-based active material, or a mixture of the carbon-based active material and the silicon-based active material.
